# EUROPEAN PATENT APPLICATION

(11) **EP 2 472 371 A1**
(43) Date of publication of application: **04.07.2012**
(21) Application number: 10811565.0
(22) Date of filing: 16.04.2010
(51) Int. Cl.: G06F 3/042, G02F 1/1333, G06F 3/041

(54) **LOCATION IDENTIFICATION SENSOR, ELECTRONIC DEVICE, AND DISPLAY DEVICE**

(30) Priority: 25.08.2009 JP 2009194374
(71) Applicant: Sharp Kabushiki Kaisha, Osaka-shi, Osaka 545-8522 (JP)
(72) Inventor: HATA, Masayuki, Osaka-shi, Osaka 545-8522 (JP); NAGAKAWA, Toshiaki, Osaka-shi, Osaka 545-8522 (JP); YOSHIMIZU, Toshiyuki, Osaka-shi, Osaka 545-8522 (JP); MIZUNO, Yukio, Osaka-shi, Osaka 545-8522 (JP)
(74) Representative: Goddar, Heinz J.
(86) International application number: PCT/JP2010/056870
(87) International publication number: WO 2011/024512

(57) **Abstract**

The present invention provides a location identification sensor (60) capable of identifying a location and moving pattern of an object with correction made in consideration of the moving pattern even if the object is moving. The sensor (60) identifies a location of an object by triangulation principle, and includes at least one pair of light emitting diodes (10a, 10b), line sensors (13), and location identification means for identifying location of an object (50) between the line sensors (13) and the diodes (10) based on the triangulation principle by using first positional information and second positional information, where the first positional information indicates where the object (50) was at a predetermined timing (T2) when the diode (10a) is on, and the second positional information indicates where the object (50) was at two timings (T1 and T3) when the diode (10b) is on, T 1 and T3 being before and after T2, respectively.

## Description

### Technical Field

The present invention relates to a novel location identification sensor and an electronic device such as a display device or the like provided with the sensor.

### Background Art

In a field of coordinate detection, so-called triangulation principle is a technique for identifying positional coordinates of an object by radiating light beams from two light sources to the object and determining an intersection between straight lines connecting the respective light sources and the object.

The triangulation can be realized by such a simple configuration that light sources, a light receiving section for receiving light from the light sources and outputting a signal indicating light receiving state of the light receiving section, and a signal processing section for processing the signal of the light receiving section. As a coordinate sensor to be mounted on an electronic device such as a touch panel, a display device, or the like, a sensor for determining positional coordinates of an object with respect to the electronic device based on the triangulation principal has been developed.

For example, Patent Literature 1 discloses a touch panel provided with a coordinate sensor employing the triangulation principal and including a circulatory for performing computing processes for smoothing received light data, determining a position and size of an object to detect, discarding false detection data, and improving detection accuracy. In this touch panel, a light sending / receiving unit provided with a light source, a light receiving sensor, and a polygon mirror is provided, wherein light emitted from the light source is radiated to the object by scanning the light by using the polygon mirror.

### Citation List

### Patent Literatures

### Patent Literature 1

Japanese Patent Application Publication, Tokukaihei, No. 11-143624/ Japanese Patent No. 3847005 (Application Publication was published on May 28, 1999)

### Summary of Invention

### Technical Problem

The determination of the positional coordinates of an object with respect to an electronic device based on the triangulation principal is broadly classified, in terms of the light sources to use, into a type (1) in which light radiation to an object is carried out by using relatively narrow directional light (laser beam, etc.) scanned by a polygon mirror or the like, like Patent Literature 1, etc. and a type (2) in which light radiation to an object is carried out by using diffusion light (that is, broad light).

The type (1) requires laser light source etc. as the light source and the polygon mirror for scanning the light. Thus, the type (1) tends to have complicate configurations. Especially, in case a light sending / receiving unit is provided as in Patent Literature 1, the configuration becomes very complicated.

On the other hand, the type (2) using the diffusion light is theoretically capable of radiating the light to the object always. Moreover, the type (2) does not require the polygon mirror etc., thereby being simpler in configuration, compared with the type (1).

In the method of the type (2), however, the light receiving section cannot identify shadow of the object if the two light sources perform the light emission concurrently. This is because shadow caused by the light emission performed by one of the two light sources is cancelled out by light emitted from the other of the two light sources. Therefore, it is necessary that the two light sources perform the light emission alternatively (that is at different timings) as a principle, in order to identify the shadow of the object. In case of an object moving at a fast speed, this results in that the location identification of the object at different timings because the two light sources emit light at different timings. This causes such a problem that location identification and movement pattern identification cannot be performed accurately.

Recently, coordinate sensors mounted on electronic devices are required to be improved in capability of recognizing an object moving at high speeds, such as capability of recognizing gestures of an operator, capability of recognizing handwritten character input performed by using a finger or the like, and the like capabilities. In reality, however, the positional coordinate identification technique based on the triangulation method principle has not sufficiently satisfied this demand, as mentioned above.

The present invention was accomplished in view of the aforementioned problem, and a main object of the present invention is to provide a novel location identification sensor capable of more accurately recognizing location and moving pattern of an object even if the object is moving, and an electronic device, such as a display device or the like, provided with the location identification sensor.

### Solution to Problem

In order to attain the object, a location identification sensor according to the present invention is a location identification sensor for detecting a location of an object based on triangulation principle, including: at least one pair of diffusion light sources; light receiving means; location identification means for identifying the location of the object being located between the light receiving means and the at least one pair of the diffusion light source, the location identification means performing the location identification of the object based on the triangulation principle by using first positional information and second positional information of the object, where the first positional information is the positional information of the object at predetermined T2 which is timing when one of the at least one pair of the diffusion light sources is turned on, the second positional information is the positional information of the object at T1 and T3, which are timing when the other one of the at least one pair of the diffusion light sources is turned on, where T1 and T3 are before and after T2, respectively.

With this configuration, the location of the object is determined based on the triangulation principle by using (i) the positional information indicating where the object was at T2 at which one of the diffusion light sources is turned on, and (ii) the positional information indicating where the object was at T1 and T3 at which the other one of the diffusion light sources is turned on, where T1 and T3 are before and after T2, respectively. This makes it possible to identify location and moving pattern of the object with correction made in consideration of the moving pattern even if the object is moving during the time period between before and after T2 at which one of the diffusion lights is turned on.

The present invention also provides an electronic device and a display device, each of which includes the location identification sensor.

Further, the present invention may be directed to a method for correcting location identification of an object, the location identification obtained by using a location identification sensor for detecting a location of an object based on triangulation principle, the location identification sensor including: at least one pair of diffusion light sources; light receiving means; location identification means for identifying the location of the object being located between the light receiving means and the at least one pair of the diffusion light source, the method including: causing the location identification means to correct the location identification of the object at a predetermined T2 by using first positional information and second positional information of the object, where the first positional information is the positional information of the object at T2 which is timing when one of the at least one pair of the diffusion light sources is turned on, the second positional information is the positional information of the object at T1 and T3, which are timing when the other one of the at least one pair of the diffusion light sources is turned on, where T1 and T3 are before and after T2, respectively.

### Advantageous Effects of Invention

With the location identification sensor etc. of the present invention, it is possible to perform the location identification and moving pattern identification of a moving object with correction made in consideration of moving pattern of the moving object.

### Brief Description of Drawings

Fig. 1

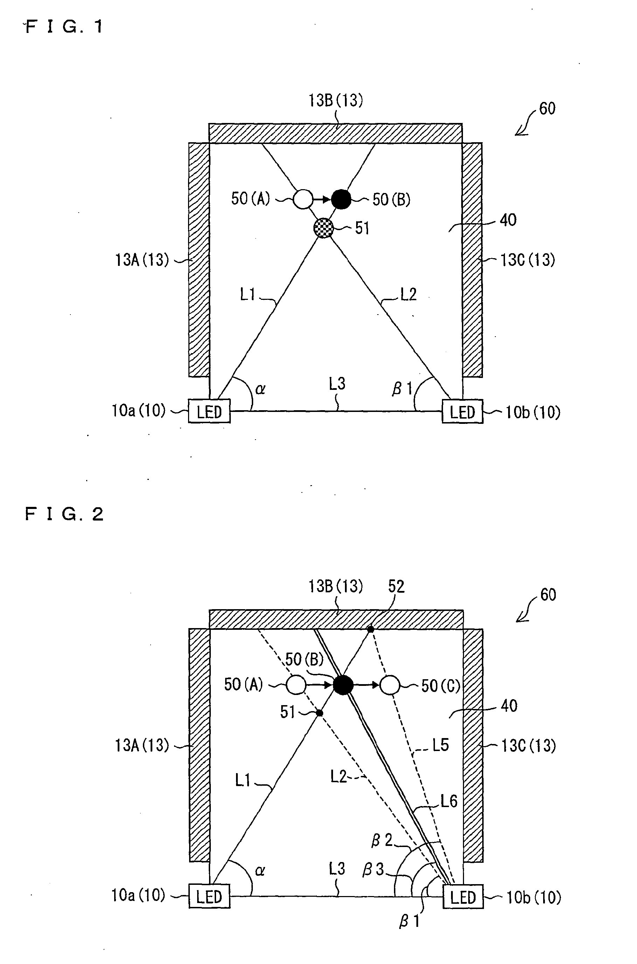

   Fig. 1 is a view illustrating an exemplary operational mode of a location identification sensor according to the present invention.
Fig. 2
   Fig. 2 is a view illustrating another exemplary operational mode of the location identification sensor according to the present invention.
Fig. 3

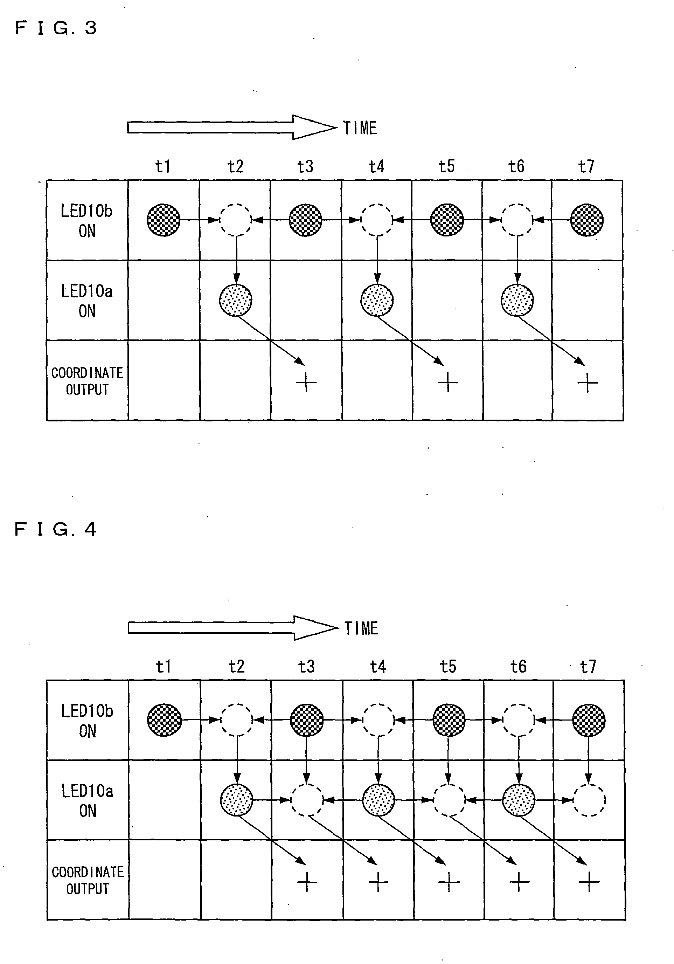

   Fig. 3 is a view illustrating an example showing how light emitting timing of a light emitting diode and an output timing of positional coordinates of the object are related with each other in the location identification sensor according to the present invention.
Fig. 4
   Fig. 4 is a view illustrating another example showing how the light emitting timing of the light emitting diode and the output timing of the positional coordinates of the object are related with each other in the location identification sensor according to the present invention.
Fig. 5

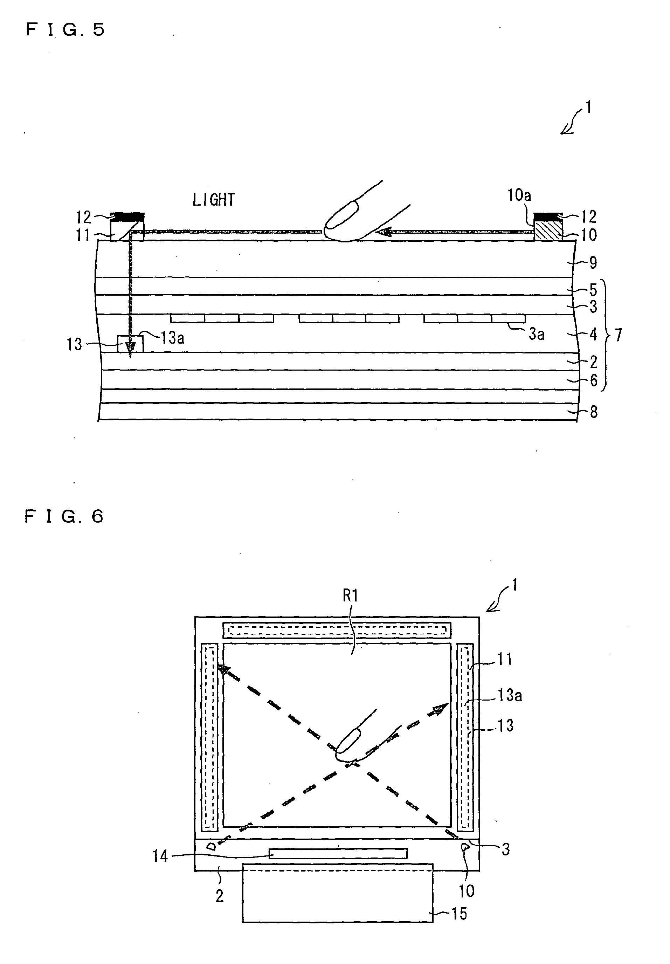

   Fig. 5 is a view schematically illustrating a configuration of a liquid crystal display device of a coordinate sensor-integrated type according to the present invention.
Fig. 6
   Fig. 6 is a view illustrating the liquid crystal display device of Fig. 5 viewed from its display surface side.
Fig. 7

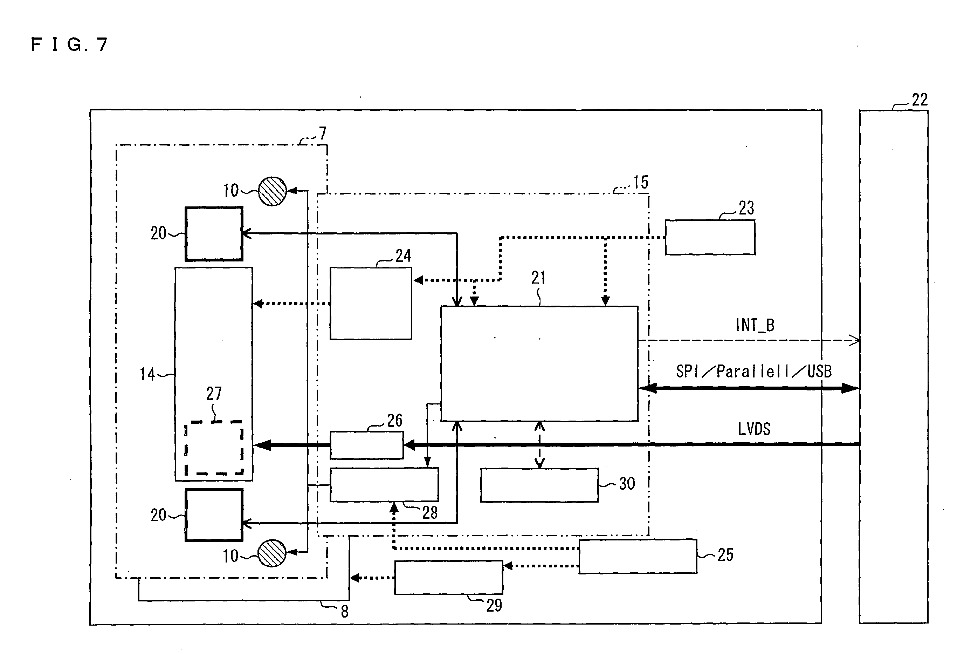

   Fig. 7 is a system block diagram of the liquid crystal display device of Fig. 5.

### Description of Embodiments

### [Embodiment 1]

### (Basic Configuration of Location Identification Sensor)

Hereinafter, an example of an operation of a location identification sensor of the present invention is explained below, referring to Figs. 1 to 3. The location identification sensor exemplified herein is a so-called 2-dimensional coordinate sensor, which performs location identification of an object (light blocking object) such as a finger by using coordinate values on 2-dimensional coordinates.

A location identification sensor 60 according to the present invention includes at least one pair of light emitting diodes (diffusion light sources) 10, a plurality of line sensors 13 for receiving light emitted from the light emitting diodes 10, and a coordinate detecting circuit (location identification means: see Fig. 7) 21 for identification of location of an object 50 on the basis of outputs of the line sensors 13. The location identification sensor 60 performs the location identification of the object 50 between the line sensors 13 and the light emitting diodes 10 on the basis of triangulation principle. Hereinafter, the pair of light emitting diodes 10 may be referred to as light emitting diode 10a and 10b, respectively in case where they should be referred distinguishably. Similarly, the pluralities of line sensors 13 may be referred to as line sensors 13A, 13B, and 13C in case where they should be referred distinguishably.

The pair of light emitting diodes 10 are alternatively turned on. That is, the light emitting diodes 10a and 10b are repeatedly turned on and off in such a manner that the light emitting diode 10a is turned on while the light emitting diode 10b is turned off, and the light emitting diode 10a is turned off while the light emitting diode 10b is turned on. It should be noted that the feature "the pair of light emitting diodes 10 are alternatively turned on" encompasses cases where a time period in which the light emitting diode 10a is turned on coexists partially with a time period in which the light emitting diode 10b is turned on, and cases where a time in which the light emitting diode 10a is turned off overlaps partially with a time in which the light emitting diode 10b is turned off.

Each light emitting diode 10 emits diffusion light spreading in a fan-like form in plane directions of a detection surface 40 for detecting the object 50 (that is, directions parallel with the detection surface). With this configuration, each light emitting diode 10 can solely radiates the light to the object 50 located in touch with or in a vicinity of any position on the detection surface 40.

Each line sensor 13 has a configuration in which a plurality of light sensors (light receiving elements (not illustrated)) are arranged along a predetermined direction. Line sensors 13B and 13C, which are provided along an upper side and a right side of the location identification sensor 60, respectively, are configured to receive light emitted from a light emitting diode 10a provided at a left lower corner of the location identification sensor 60. The line sensor 13B and a light sensor 13A, which are provided along the upper side and a left side of the location identification sensor 60, respectively, are configured to receive light emitted from a light emitting diode 10b provided at a right lower corner of the location identification sensor 60.

If there is no object 50 in the vicinity or in touch with the detection surface 40, all of the light sensors constituting the line sensors 13B and 13C receive substantially identical amounts of light when the light emitting diode 10a is turned on. Similarly in this case, all of the light sensors constituting the line sensors 13B and 13A receive substantially identical amounts of light when the light emitting diode 10b is turned on.

On the other hand, if there is an object 50 in the vicinity with or in touch with the detection surface 40, a light sensor located on a straight line extended via the light emitting diode 10a (or 10b) and the object 50 (that is, a light sensor shadowed by the object 50) among the light sensors detects a smaller amount of received light than the other light sensors when the light emitting diode 10a or 10b is turned on. The location identification sensor 60 is configured such that the coordinate detecting circuit (see Fig. 7) 21 identifies the location of the object 50 by using the triangulation principle based on outputs from the line sensors 13 in which outputs the change in the detected amount of received light, that is, received light information, is reflected.

The location identification of an object on the basis of the triangulation principle is performed, if necessary, with such approximation that the pair of light emitting diodes are approximated as points on the coordinates, respectively, and the object is approximated as one point on the coordinates. The approximation may be performed, for example, by a well-known method such as using center of gravity coordinates of the light emitting diodes 10 and the object.

The location identification sensor 60 is configured such that the detection surface 40 has a quadrangular shape. When the detection surface 40 is viewed above therefrom perpendicularly, the pair of the light emitting diodes 10 are provided along one side of the detection surface 40 (more specifically, at both ends of the side respectively), and the line sensors 13 are provided along the other three sides of the detection surface 40, respectively. This geometrical relationship between the light emitting diodes 10 and the line sensors 13 is one preferably example adoptable for the location identification of the object 50 based on the triangulation principle. It should be noted that the geometrical relationship is not limited this, and a well-known geometrical relationship adoptable for location identification sensors based on the triangulation principle may be employed.

Moreover, the location identification sensor 60 is not limited particularly to the light emitting diodes 10 exemplified herein as the light sources for the diffusion light. For example, various types of point light sources configured to emit diffusion light by having a light emitting surface in a curved shape, and the like light source are suitably employable as the light sources. The location identification sensor 60 exemplified herein includes paired light emitting diodes as the light sources. However, the location identification sensor 60 may have three or more of light emitting diodes, and perform the location identification of an object based on the triangulation principle by using pairs of the light emitting diodes combined from among the three or more of light emitting diodes.

### (Details of Operation of Location Identification Sensor)

### (1) Operation mode for a case an object to detect is not moving or is moving slowly

Fig. 1 is a view illustrating one exemplary operation of the location identification sensor 60.

The object 50 is an object moving in the direction indicated by the arrow in Fig. 1. More specifically, the object 50 is at position A at time t1 at which the light emitting diode 10b is turned on, and is at position B at time t2 at which the light emitting diode 10a is turned on. Here, time t1 is prior to time t2.

The coordinate detecting circuit 21 (see Fig. 7) identify the location of the object 50 on the basis of the triangulation principle from positional information as to where the object 50 was at time t1 (position A) and positional information as to where the object 50 was at time t2 (position B). Here, the positional information of the object at time t1 is a mathematical expression indicating a straight line L2 connecting the object 50 (position A) and the light emitting diode 10b, or an angle of an azimuth β1 formed between the straight line L2 and a straight line L3 connecting the light emitting diodes 10a and 10b (that is, an azimuth of the object 50 positioned at position A). The positional information of the object 50 at time t2 is a mathematical expression indicating a straight line L1 connecting the object 50 (position B) and the light emitting diode 10a, or an angle of an azimuth a formed between the straight line L1 and the straight line L3 (that is, an azimuth of the object 50 positioned at position B). These positional information can be obtained based on received light information outputted from the line sensor 13. The positional information thus obtained is temporally stored in a memory 30 (see Fig. 7) of the location identification sensor 60, so that the positional information is supplied to the coordinate detecting circuit 21 (see Fig. 7) at a timing when the location identification of the object is performed.

By the triangulation principle, the location of the object 50 can be identified if how long the straight line L3 connecting the pair of the light emitting diodes 10a and 10b is (constant value) and how large the two azimuths a and β1 are known. As one alternative, the location of the object 50 can be identified if how long the straight line L3 is and the mathematical expressions of the two lines L1 and L2 are known. This is well known in the field of the triangulation.

The location of the object 50 at time t2 thus obtained is coordinates of an intersection 51 at which the straight line L1 and the straight line L2 intersects. The coordinates indicate the location of the object 50 at time t2 exactly if the object 50 is not moving (not illustrated).

On the other hand, if the object 50 is moving, the position (position B) of the object 50 at time t2 does not match with the intersection 51. Moreover, a moving pattern identified by the location identification sensor does not becomes identical with an actual moving pattern of the object 50. The deviation in the identification becomes more significant if the object 50 moves at a faster speed.

### (2) Operation mode for a case an object to detect is moving

Fig. 2 is another exemplary operation of the location identification sensor 60, and one of main characteristics of the present invention. This operation is especially suitable for a case where the object to detect is moving. Here, the object 50 is an object moving in the direction indicated by the arrow in Fig. 2. More specifically, the object 50 is at position A at time t1 when the light emitting diode 10b is turned on. The object 50 is at position B at time t2 when the light emitting diode 10a is turned on. And the object 50 is at position C at time t3 when the light emitting diode 10b is turned on again. Here, times t1, t2, and t3 are times flowing in this order.

The coordinate detecting circuit 21 (see Fig. 7) identifies the location of the object at time t3 on the basis of the triangular principle from the positional information (first positional information) as to where the object 50 was at time t2, and the positional information (second positional information) as to where the object 50 was at times t1 and t3. Here, the positional information (first positional information) of the object 50 at time t2 is a mathematical expression indicating the straight line L1 connecting the object 50 (position B) and the light emitting diode 10a, or an angle of the azimuth α formed between the straight line L1 and the straight line L3 connecting the light emitting diodes 10a and 10b.

On the other hand, the positional information (second positional information) as to where the object 50 was at times t1 and t3 is mathematical expressions indicating the straight line L2 and a straight line L5, or angles of the azimuth β1 formed between the straight line L3 and the straight line L2 and an azimuth β2 formed between the straight line L3 and the straight line L5. Here, the straight line L2 is a straight line connecting the light emitting diode 10b and the object 50 (position A). The straight line L5 is a straight line connecting the light emitting diode 10b and the object 50 (position C).

In this operation mode, the second positional information is used in the triangulation as shown in (a) or (b) below.

(a) The location identification of the object based on the triangulation is performed with an intermediate value of two pieces of information (positional information at time t1 and positional information at time t3) included in the second positional information, wherein the intermediate value is created by combining the two pieces of information. Here, the intermediate value is a mathematical expression indicating a straight line L6 (indicated by a double line in Fig. 2) passing the light emitting diode 10b and having a mean gradient between gradients of the straight line L2 and the straight line L5 (where L6 is a straight line different from L2 and L5). Or, the intermediate value is an angle β3 having an angle between the azimuths β1 and β2 (where the angle β3 ≠ β1 and β2). The location identification sensor 60 (more specifically, the coordinate detecting circuit 21) performs the location identification of the object from the straight line L6 or the angle β3, and from the first positional information by the triangulation by a standard method known in the art.

The position B, thus obtained, of the object 50 identified at time t3 is coordinates indicating an intersection between the straight line L1 and the straight line L6. The coordinates indicate the location of the object 50 at time t2 substantially exactly. That is, the location identification sensor 60 is capable of identifying the location and moving pattern of the object 50 very accurately, even though identification time is deviated (time t3 - t2) to be delayed from the time when object 50 was at the location. The deviation in the identification time (time t3 - t2) can be substantially negligible by setting light emitting intervals of the light emitting diodes 10 shorter.

Note that an interval between time t1 and time t2 is set to be substantially identical with an interval between time t2 and time t3 in general. Thus, it is preferable that the gradient of the straight line L6 is an average of the gradients of the straight lines L2 and L5. Similarly, it is preferable that the angle β3 is an average of the azimuths β1 and β2. However, if the interval between time t1 and time t2 is set to be different from the interval between time t2 and time t3, the gradient of L6 or the angle β3 may be an intermediate value in which the difference is reflected. For example, if the interval between time t1 and time t2 is and the interval between time t2 and time t3 are in a relationship of X : Y (X ≠ Y), the angle β3 may be a value = (X × β2 + Y × β1) / (X + Y), or the straight L6 may be declined at the angle β3.

(b) The location identification of the object based on the triangulation is performed with the first positional information and one of the two pieces of information (positional information at time t1 and positional information at time t3) included in the second positional information, and with the first positional information and the other one of the two pieces of information. Then, an intermediate value of the positions (positions 51 and 52 in Fig. 2) of the object is identified as the position at which the object was at time t3. That is, the second positional information of the object 50 is information as to two azimuths of the object, which azimuths are obtained at the light emitting timings (t1 and t3) before and after the predetermined light emitting timing (t2). The location identification means identifies, as the location of the object, the intermediate value of the positions at which the object was determined to be located according to the above calculation based on the triangulation principle using the first positional information and the second positional information.

Depending on how much calculation amount is required, and how accurate the location identification should be, it may be more preferable that the second positional information is used as described in (a).

Fig. 3 is a view illustrating turning-on and turning-off timings of the light emitting diodes 10a and 10b, and output timing of the positional coordinates of the object 50 in the present operation mode. In Fig. 3, time elapses from time t1 to t7. The light emitting diode 10a and the light emitting diode 10b are alternatively turned on. That is, at times t1, t3, t5, and t7, the light emitting diode 10a is turned off, but the light emitting diode 10b is turned on. At times t2, t4, and t6, the light emitting diode 10a is turned on and the light emitting diode 10b is turned off. Here, the time in which the light emitting diode 10a is turned on may be partially overlapped with the time in which the light emitting diode 10b is turned on (for example, an end of the time t1 and a start of the time t2 may be overlapped), and the time in which the light emitting diode 10a is turned off may be partially overlapped with the time in which the light emitting diode 10b is turned off.

At time t3, the positional coordinates of the object at time t2 is outputted, which positional coordinates are determined based on triangulation principle from the first positional information (as to the position at time t2) and the second positional information (as to the positions at times t1 and t3). Similarly at times t5 and t7, the positional coordinates of the object at times t4 and t6 respectively are outputted, which positional coordinates are determined in a similar manner. Thus, the location identification sensor 60 outputs very accurate positional coordinates and moving pattern of the object 50 at the timing when the light emitting diode 10b is turned on.

### (3) Variations of Operation mode, etc.

In the above, the location identification sensor 60 is explained as having two types of operation modes as illustrated in Figs. 1 and 2. The two types of operation modes are switched over by a control section (mode switching means; not illustrated) of the location identification sensor 60, for example, in response to an operator's instruction to instruct the switching-over of the operation modes.

The operation mode illustrated in Fig. 2 can identify the location of an object not moving. Thus, the location identification sensor 60 may be configured to have only the operation mode illustrated in Fig. 2. Moreover, even if the location identification sensor 60 is used mainly for identifying location of a moving object, the location identification sensor 60 may be configured to have only the operation mode illustrated in Fig. 2.

### [Embodiment 2]

In the following, another exemplary operation of the location identification sensor 60 according to the present invention is described, referring to Fig. 4.

Fig. 4 is a view illustrating turning-on and turning-off timings of the light emitting diodes 10a and 10b, and an output timing of positional coordinates of the object 50 in an operation mode according to the present embodiment. In short, the present embodiment is configured such that the positional coordinates of the object 50 is outputted both when the light emitting diode 10a is turned on and when the light emitting diode 10b is turned on, whereby the present embodiment outputs the positional coordinates two-times more frequently than the one illustrated in Fig. 3.

In Fig. 4, time elapses from time t1 to t7. The light emitting diodes 10a and 10b are alternatively turned on. That is, at times t1, t3, t5, and t7, the light emitting diode 10a is turned off, but the light emitting diode 10b is turned on. At times t2, t4, and t6, the light emitting diode 10a is turned on and the light emitting diode 10b is turned off. Here, the time in which the light emitting diode 10a is turned on may be partially overlapped with the time in which the light emitting diode 10b is turned on (for example, an end of the time t1 and a start of the time t2 may be overlapped), and the time in which the light emitting diode 10a is turned off may be partially overlapped with the time in which the light emitting diode 10b is turned off.

At time t3, the positional coordinates of the object at time t2 is outputted, which positional coordinates are determined based on triangulation principle from the first positional information (as to the position at time t2) and the second positional information (as to the positions at times t1 and t3). Similarly at times 5 and t7, the positional coordinates of the object at times t4 and t6 respectively are outputted, which positional coordinates are determined in a similar manner.

Further, at time t4, the positional coordinates of the object at time t3 is outputted, which positional coordinates are determined based on triangulation principle from the first positional information (as to the positions at times t2 and t4) and the second positional information (as to the position at time t3). Similarly at times t6 and t8 (not illustrated), the positional coordinates of the object at times t5 and t7 respectively are outputted, which positional coordinates are determined in a similar manner. Thus, the location identification sensor 60 outputs very accurate positional coordinates and moving pattern of the object 50 both at the timings when the light emitting diode 10a is turned on and at the timings when the light emitting diode 10b is turned on.

Note that the location identification method of the object 50 described above referring to Fig. 2 may be employed to identify the location of the object 50 based on the triangulation principle from the first positional information and the second positional information of the object 50, which are respectively (i) positional information obtained at two turning-on timings t2 and t4 of the light emitting diode 10a before and after the turning-on timing t3 of the light emitting diode 10b, and (ii) positional information obtained at the turning-on timing t3 of the light emitting diode 10b.

### [Embodiment 3]

In the following, a liquid crystal display device (display device/electronic device) 1 is described referring to Figs. 5 to 7. The liquid crystal display device 1 includes a coordinate sensor corresponding to the location identification sensor 60 exemplified in Embodiment 1 or 2 above. Note that the like members identical with these described in Embodiment 1 or 2 are labeled with the same numerical numbers.

Fig. 5 is a view schematically illustrating the liquid crystal display device 1, which is of a coordinate sensor-integrated type.

As illustrated in Fig. 5, the liquid crystal display device 1 includes a liquid crystal panel 7, a backlight 8, light emitting diodes 10, light receiving mirrors 11 serving as optical path changing sections, light blocking films 12 formed to cover the light emitting diodes 10 and the light receiving mirror 11 respectively, and line sensors 13 in which the light sensors (light receiving elements) are provided along the X-axis and Y-axis directions, respectively. The light emitting diodes 10, the light receiving mirrors 11, the light blocking films 12, and the line sensors 13 are constituent members of the location identification sensor 60 (Fig. 1).

Fig. 6 is a view illustrating the liquid crystal display device 1 from its display surface side.

In the following, the coordinate sensor provided to the liquid crystal display device 1 is described in more detail, referring to Fig. 6.

As illustrated in Fig. 6, the coordinate sensor provided to the liquid crystal display device 1 according to present embodiment is configured such that two light emitting diodes 10 are provided respectively at either outward corners of a lower side of a display area (coordinate input area/detection surface) R1 so as to serve as light sources (light emitting element) for the coordinate sensor).

As illustrated in Fig. 5, the light emitting diodes 10 is configured such that the whole coordinate input area R1 of the coordinate sensor is radiated with light along a surface of a protective plate 9 provided to one surface of the liquid crystal panel 7, which surface is opposite to another surface of the liquid crystal panel 7 that faces the backlight 8.

The present invention is not limited to the present embodiment, in which two light emitting diode 10 are used as the light sources for the coordinate sensor, and the present invention is not particularly limited as to the position and the number of the light sources, provided that the light sources are at least two and the whole coordinate input area R1 of the coordinate sensor is radiated with the light by the light sources.

Moreover, the light emitting diodes 10 are preferably configured to emit infrared light or ultraviolet light, and more preferably configured to emit infrared light.

With the configuration in which the light emitting diodes 10 are configured to emit infrared light or ultraviolet light, it is possible to detect the coordinates of the object without affecting a display state of the liquid crystal display device 1.

In the present embodiment, the present invention is not limited to the present embodiment in which the light emitting diodes 10 are used as the light sources (light emitting elements) for the coordinate sensor. That is, the light sources for the coordinate sensor are only required to radiate light with diffusivity to the wide surface to be sensed by the sensor (that is, light having such a fan-like form that the light source is located at a "linchpin" of the "fan" and the light is spread fanwise with a predetermined spread angle from the " linchpin" when viewed perpendicularly above the detection surface of the coordinate sensor). More specific example encompass (1) diffusion light source in which a laser light source and an optical member(s) (such as a lens) for focusing and for diffusing a laser light are used in combination; (2) diffusion light source in which a fluorescent tube or a small light bulb for producing visible light and an optical member(s) (such as a lens) for focusing and for diffusing the visible light are used in combination (if a display property is not so important); and the like diffusion light source. However, the light emitting diodes are more preferable than these light sources in terms of their physical dimension and cost.

As illustrated in Fig. 5, the liquid crystal panel 7 is configured such that an active matrix substrate 2 provided with pixel TFTs (not illustrated) for driving pixel electrodes according to image signal data, and the line sensors 13, and a counter substrate 3 provided with a color filter layer 3a are assembled to face each other, and a liquid crystal layer 4 is sealed between the active matrix substrate 2 and the counter substrate 3 by using a sealing material.

Further, the counter substrate 3 is provided with an upper-side polarizer 5, while the active matrix substrate 2 is provided with a lower-side polarizer 6.

It should be noted that the protective plate 9 is omitted from Fig. 6 illustrating the liquid crystal display device 1 from its display surface side.

In the present embodiment, the line sensors 13 are formed during the step for forming the pixel TFTs provided to the active matrix substrate 2. Thus, the line sensors 13 are provided on the surface of the active matrix substrate 2 on which surface the pixel TFTs are formed.

Moreover as described above, the light emitting diodes 10 are configured such that, by the light emitting diodes 10, the whole coordinate input region R1 of the coordinate sensor is radiated with the light along the surface of the protective plate 9 provided on the surface of the liquid crystal panel 7, which surface is opposite to the another surface on which the backlight 8 is provided. Therefore, the light receiving mirrors 11 are provided as the optical path changing sections in order to guide such light to light receiving surfaces 13a of the light sensors of the line sensors 13 provided on that surface of the active matrix substrate 2 on which the pixel TFTs are provided.

Even though it is not illustrated here, it is possible to adopt a configuration in which the line sensors 13 are not provided on the active matrix substrate 2 and the line sensors 13 are, for example, configured such that the light receiving surfaces 13a of the light sensors of the line sensors 13 face with light emitting surfaces of the light emitting diodes 10 on the protective plate 9. In such a configuration, the light receiving mirrors 11 are not necessary.

Moreover, the protective plate 9 may be, but not limited to a protective plate made from a material that allows protection of the liquid panel 7 without lowering visibility of the display area R1 of the liquid crystal display device 1, and for example may be made from an acrylic transparent material.

Moreover, the light emitting diodes 10 and the light receiving mirrors 11 may not be provided on the protective plate 9, if the light emitting diodes 10 and the light receiving mirrors 11 can be provided directly on that surface of the counter substrate 3 which is opposite to another surface thereof facing the active matrix substrate 2.

For example, if the upper-side polarizer 5 is provided on the counter substrate 3 in such a manner that the upper-side polarizer 5 is provided only in an area corresponding to the display area (coordinate input area of the coordinate sensor) R1, the light emitting diode 10 and the light receiving mirrors 11 can be provided directly on the counter substrate 3 by being provided out of the area corresponding to the display area R1.

In the present embodiment, the light receiving mirrors 11 include a prism having a slant surface formed or polished to be 45° mirror, and the prism is provided in an edge section of an upper surface of the protective plane 9. The present invention is not limited to such an embodiment, provided that the light emitted from the light emitting diodes 10 can be guided to the light receiving surfaces 13a of the light sensors provided to the line sensors 13.

Moreover, as illustrated in Fig. 5, the light blocking films 12 are provided to cover each of the light emitting diodes 10 and the light receiving mirrors 11, respectively.

By providing the light blocking films 12 to cover the light receiving diodes 10, it is possible to reduce an amount of light emitted from the light emitting diode 10 directly to an observer-side of the liquid crystal display device 1.

Moreover, by providing the light blocking films 12 to cover the light receiving mirrors 11, light (such as sun light) other than the light emitted from the light emitting diode 10 can be blocked so as to be prevented from entering the light receiving surface 13a of the light sensors provided to the line sensors 13.

Note that, as illustrated in Fig. 6, the coordinate sensor provided to the liquid crystal display device 1 of the present embodiment is provided with the light receiving mirrors 11 along outer peripheries of upper, left, and right sides of the display area (coordinate input area/detection surface of the coordinate sensor) R1 of the liquid crystal display device 1, and the three line sensors 13 are provided respectively on the outer peripheries of upper, left, and right sides of the display area (coordinate input area of the coordinate sensor) R1 of the liquid crystal display device 1 in such a manner that the light receiving mirrors 11 and the line sensors 13 overlap correspondingly.

Moreover, the positions and numbers of the light receiving mirrors 11 and the line sensors 13 are not particularly limited and may be decided as appropriate, in consideration of a light emitting property, positions, and number of the light emitting diodes 10.

The present invention is not particularly limited to the present embodiment in which, in order to allow the liquid crystal display device 1 to have a narrower frame, the light receiving mirrors 11 are prisms having a slant surface formed or polished to be 45° mirror, and therefore the light receiving mirrors 11 are correspondingly overlapped with the line sensors 13.

Moreover, as illustrated in Fig. 6, the active matrix substrate 2 may be configured to be longer than the counter substrate 3 in a bottomward direction in Fig. 6, so that for example, an A/D converting circuit or a gate/source driving circuit (later described in more detail) is provided in a portion 14 by a COG (Chip On Glass) technique wherein the portion 14 is part of this extra portion of the active matrix substrate 2.

Moreover, another driving chip or the like may be further mounted on an FPC 15 (Flexible Printed Circuits).

Moreover, the light sensors provided to the line sensors 13 may be photo diodes, photo transistors, or the like, and are configured to detect the amount of the received light by supplying to outside an electric current or electric charge being dependent on intensity of the received light.

The light sensors are not particularly limited, provided that they can sense the light emitted from the light emitting diodes 10 serving as the light sources for detection of indicated coordinates. For example, light sensors made from a-Si (amorphous silicon), p-Si (polysilicon, polycrystalline silicon) or CG silicon (Continuous Grain Silicon) may be used.

Fig. 7 is one example illustrating a system block diagram of the liquid crystal display device 1.

As illustrated in Fig. 7, a main control section 22 and a timing controller 26 are connected with each other by LVDS (Low Voltage Differential Signaling). The main control section 22 sends to the timing controller 26 a vertical sync signal, a horizontal sync signal, a data enable signal, an RGB data signal, a clock signal, etc.

The timing controller 26 sends the RGB data signal to the source driving circuit constituting the liquid crystal driving circuit 27, and controls the gate driving circuit constituting the liquid crystal driving circuit 27.

Moreover, as described above, the electric charge accumulated in the light sensor 13s provided to the liquid crystal panel 7 is converted into digital data by an A/D converting circuit 20 and then the digital data is supplied to a coordinate detecting circuit 21 (identifying chip).

The memory 30 stores the first positional information and the second positional information described in Embodiments 1 and 2.

Further, the liquid crystal display device 1 includes a driving circuit 28 for controlling the light emitting diodes 10 serving as the light sources for the coordinate sensors, and a driving circuit 29 for controlling light emitting diodes provided to the backlight 8.

Moreover, a logic power source circuit 23 is configured to provide the coordinate detecting circuit 21 and a first power source circuit 24 with a power source of 1.8 V or 3.0 V.

The first power source circuit 24 supplies power to the liquid crystal driving circuit 27 and the light sensor 13s.

Moreover, a second power source circuit 25 supplies power to a driving circuit 28 for controlling the light emitting diodes 10 serving as the light sources for coordinate sensors, and a driving circuit 29 for controlling the light emitting diodes provided to the backlight 8.

The coordinate detecting circuit 21 and the main control section 22 may be connected by another connection method such as SPI (serial Peropheral Interface), a parallel connection, USB (Universal Serial Bus), or the like.

As illustrated in Fig. 7, when the coordinates are detected, an insertion signal (INT_B) is transmitted from the coordinate detecting circuit 21 to the main control section 22, so that the main control section 22 on a liquid crystal display device-side gets ready for receiving coordinate data. After that, the coordinate detecting circuit 21 sends the coordinate data to the main control section 22.

As described above, the liquid crystal display device 1 includes (i) the line sensor detecting circuit 16 for converting into a digital signal the amount of received light detected by the light sensor 13s, (ii) the memory 30 for storing therein digital signals corresponding to amounts of received light detected by the coordinate sensors in the initial state while the object to be detected is not present with or without the light emitting diodes 10 emitting the light, (iii) the coordinate detecting circuit 21 for detecting the location of the object based on the digital signals supplied from the line sensor detecting circuit 16 and the memory 30.

As described in Embodiments 1 and 2, the coordinate detecting circuit 21 is configured to identify the location and moving pattern of the object with correction made in consideration of the moving pattern, even if the object is moving in the time period between before and after the light emission of a light emitting diode 10.

With this configuration, it is possible to realize a liquid crystal display device 1 capable of stably detecting coordinates of an object to be detected. More specifically, it is possible to provide a touch panel device, television device, etc. capable of accurately performing location identification for an object moving at a high speed, such as location identification for a gesture of an operator, pen input, and handwriting input.

Moreover, as described in Embodiment 1 and 2, the location identification is based on triangulation principle, and therefore can be carried out with such a simple configuration that includes a pair of light emitting diodes 10, line sensors 13 fro receiving light emitting from the light emitting diodes 10, and a coordinate detecting circuit 21 for performing the location identification of an object 50 based on output of the line sensors 13. Further, because the diffusion light sources (light emitting diode) and the light receiving means (line sensors) are different constituents, there is such an advantage that a light transmitting receiving unit with a complicated configuration (see Patent Literature 1) is not necessary.

### [Embodiment 4]

The present invention relating to a location identification sensor may be grasped as follows.

(1) A method for correcting location identification of an object, the location identification obtained by using a location identification sensor for detecting a location of an object based on triangulation principle, the location identification sensor including: at least one pair of diffusion light sources; light receiving means for receiving light emitted from the diffusion light sources; location identification means for identifying the location of the object on the basis of received light information of the light, the object being located between the light receiving means and the at least one pair of the diffusion light source, the received light information being supplied from the light receiving means, the method comprising: causing the location identification means to correct the location identification of the object at a predetermined T2 by using first positional information and second positional information of the object, where the first positional information corresponds to the output of the light receiving means for T2 which is timing when one of the at least one pair of the diffusion light sources is turned on, the second positional information corresponds to the output of the light receiving means for T1 and T3, which are timing when the other one of the at least one pair of the diffusion light sources is turned on, where T1 and T3 are before and after T2, respectively.

In other words, it can be said that a conventional location identification sensor for performing the location identification of an object on the basis of the triangulation principle performs the location identification of the object at a turning-on timing T2 on the basis of one of the positional information regarding where the object was at the turning-on timing T1 and the positional information regarding where the object was at the turning-on timing T3, and on the basis of the positional information regarding where the object was at the turning-on timing T2, meanwhile the method according to the present invention for correcting location identification of an object performs the location identification of the object at a turning-on timing T2 on the basis of the second positional information regarding where the object was at the turning-on timings T1 and T3. The details in the definition of the second positional information of the object is common among Embodiments 1 to 3.

(2) In addition to the arrangement of (1), the method comprising causing the location identification means to correct the location identification of the object by using first positional information and second positional information of the object, where the first positional information corresponds to the output of the light receiving means for T2 and T4 which are timing when the one of the at least one pair of the diffusion light sources is turned on, and the second positional information corresponds to the output of the light receiving means for T3 which is timing when the other one of the at least one pair of the diffusion light sources is turned on, where T2 and T4 are before and after T3, respectively.

In other words, it can be said that a conventional location identification sensor for performing the location identification of an object on the basis of the triangulation principle performs the location identification of the object at a turning-on timing T3 on the basis of one of the positional information regarding where the object was at the turning-on timing T2 and the positional information regarding where the object was at the turning-on timing T4, and on the basis of the positional information regarding where the object was at the turning-on timing T3, meanwhile the method according to the present invention for correcting location identification of an object performs the location identification of the object at a turning-on timing T3 on the basis of the first positional information regarding where the object was at the turning-on timings T2 and T4. The details in the definition of the first positional information of the object is common among Embodiments 1 to 3.

The present invention can be expressed as follows.

The location identification sensor according to the present invention may be preferably configured such that the location identification means is configured to further detect the location of the object based on the triangulation principle by using first positional information and second positional information of the object, where the first positional information corresponds to the output of the light receiving means for T2 and T4 which are timing when the one of the at least one pair of the diffusion light sources is turned on, and the second positional information corresponds to the output of the light receiving means for T3 which is timing when the other one of the at least one pair of the diffusion light sources is turned on, where T2 and T4 are before and after T3, respectively.

This configuration makes it possible to identify the location and moving pattern of an object with correction made in consideration of the moving pattern even if the object is moving during a time period between before and after T3 when the other of the diffusion light source is turned on. Thus, this configuration makes it possible to perform the location identification etc. of an object more accurately.

The location identification sensor according to the present invention may be preferably configured such that the first positional information of the object, which regards where the object was at T2 and T4, which are timings when one of the pair of the diffusion light source is turned on, is, for example, information regarding an angle θ1 being an angle between two azimuths of the object, which azimuths are obtained at T2 and T4 (where the angle θ1 is not identical with the two azimuths). More preferably, the information regarding the angle θ1 is information regarding an average angle between the azimuths of the object, which azimuths are obtained at T2 and T4.

In the present invention, the azimuths of the object, which azimuths are obtained at T2 and T4, are angles formed between a straight line connecting the one of the diffusion light source and the object at a timing in question (that is, the turning-on timing T2 or T4), and the straight line connecting the pair of the diffusion light sources.

In the location identification sensor according to the present invention, the information regarding the angle θ1 may be information regarding how large the angle θ1 is, but for example may be information regarding a straight line making the angle θ1 with a straight line connecting the at least one pair of diffusion light sources, and crossing, at the one of the at least one pair of diffusion light sources, the straight line connecting the at least one pair of diffusion light sources (that is, the information regarding the angle θ1 may be an equation expressing that straight line on the coordinates). Compared with the case where the information regards how large the angle θ1, the calculation can be easier and faster in general if the information regards the straight line.

In the location identification sensor according to the present invention, the second positional information of the object, which regards where the object was at T1 and T3, which are turning-on timings when the other one of the at least one pair of the diffusion light is turned on, is, for example, information regarding an angle θ2 being an angle between two azimuths of the object, which azimuths are obtained at T1 and T3 (where the angle θ2 is not identical with the two azimuths). More preferably, the information regarding the angle θ2 is information regarding an average angle between the azimuths of the object, which azimuths are obtained at T1 and T3.

In the present invention, the azimuths of the object, which azimuths are obtained at T1 and T3, are angles formed between a straight line connecting the other one of the diffusion light source and the object at a timing in question (that is, the turning-on timing T1 or T3), and the straight line connecting the pair of the diffusion light sources.

In the location identification sensor according to the present invention, the information regarding the angle θ2 may be information regarding how large the angle θ2 is, but for example may be information regarding a straight line making the angle θ2 with a straight line connecting the at least one pair of diffusion light sources, and crossing, at the other one of the at least one pair of diffusion light sources, the straight line connecting the at least one pair of diffusion light sources. Compared with the case where the information regards how large the angle θ2, the calculation can be easier and faster in general if the information regards the straight line.

In any of these configuration, the location identification sensor according to the present invention may be configured such that it comprises: a detection surface for being touched or approached by the object, the detection surface of a quadrangular shape, wherein the at least one pair of diffusion light sources are provided along one of sides of the detection surface, and the light receiving means, which is linearly configured, are provided along the other three sides of the detection surface. Such a geometry of the diffusion light sources and the light receiving means is especially suitable for performing the location identification of an object on the basis of the triangulation principle.

The method according to the present invention may comprise: causing the location identification means to correct the location identification of the object at the T3 by using first positional information and second positional information of the object, where the first positional information is the positional information of the object at T2 and T4 which are timing when the one of the at least one pair of the diffusion light sources is turned on, and the second positional information is the positional information of the object at T3 which is timing when the other one of the at least one pair of the diffusion light sources is turned on, where T2 and T4 are before and after T3, respectively.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims

### Industrial Applicability

According to the location identification sensor etc. of the present invention, it is possible to identify location and moving pattern of an object with correction made in consideration of the moving pattern even if the object is a moving object.

### Reference Signs List

- 1:: Liquid crystal display device (electronic device, display device)
- 10, 10a, 10b:: Light emitting diode (diffusion light source)
- 13, 13A, 13B, 13C:: Line sensors (light receiving means)
- 21:: Coordinate detecting circuit (location identifying means)
- 40:: Detection surface
- 50:: Object
- 60:: Location identification sensor
- t1:: time (turning-on timing T1)
- t2:: time (turning-on timing T2)
- t3:: time (turning-on timing T3)
- t4:: time (turning-on timing T4)
- β1 and β2:: Angles (two azimuths of an object)
- β3:: Angle (angle θ1 or θ2)

## Claims

1. A location identification sensor for detecting a location of an object based on triangulation principle, comprising:
at least one pair of diffusion light sources for being alternatively turned on;
light receiving means for receiving light emitted from the diffusion light sources;
location identification means for identifying the location of the object on the basis of received light information of the light, the object being located between the light receiving means and the at least one pair of the diffusion light source, the received light information being supplied from the light receiving means,
the location identification means performing the location identification of the object based on the triangulation principle by using first positional information and second positional information of the object, where the first positional information corresponds to the output of the light receiving means for a predetermined T2 which is timing when one of the at least one pair of the diffusion light sources is turned on, the second positional information corresponds to the output of the light receiving means for T 1 and T3, which are timing when the other one of the at least one pair of the diffusion light sources is turned on, where T1 and T3 are before and after T2, respectively.

2. The location identification sensor as set forth in claim 1, wherein:
the location identification means is configured to further detect the location of the object based on the triangulation principle by using first positional information and second positional information of the object, where the first positional information corresponds to the output of the light receiving means for T2 and T4 which are timing when the one of the at least one pair of the diffusion light sources is turned on, and the second positional information corresponds to the output of the light receiving means for T3 which is timing when the other one of the at least one pair of the diffusion light sources is turned on, where T2 and T4 are before and after T3, respectively.

3. The location identification sensor as set forth in claim 2, wherein the first positional information of the object is information regarding an angle θ1 being an angle between two azimuths of the object, which azimuths are obtained at T2 and T4 (where the angle θ1 is not identical with the two azimuths).

4. The location identification sensor as set forth in claim 3, wherein the information regarding the angle θ1 is information regarding an average angle between the azimuths of the object, which azimuths are obtained at T2 and T4.

5. The location identification sensor as set forth in claim 3, wherein the information regarding the angle θ1 regards a straight line making the angle θ1 with a straight line connecting the at least one pair of diffusion light sources, and crossing, at the one of the at least one pair of diffusion light sources, the straight line connecting the at least one pair of diffusion light sources.

6. The location identification sensor as set forth in any one of claims 1 to 5, wherein the second positional information of the object is information regarding an angle θ2 being an angle between two azimuths of the object, which azimuths are obtained at T1 and T3 (where the angle θ2 is not identical with the two azimuths).

7. The location identification sensor as set forth in claim 6, wherein the information regarding the angle θ2 is information regarding an average angle between the azimuths of the object, which azimuths are obtained at T1 and T3.

8. The location identification sensor as set forth in claim 6, wherein the information regarding the angle θ2 regards a straight line making the angle θ2 with a straight line connecting the at least one pair of diffusion light sources, and crossing, at the other one of the at least one pair of diffusion light sources, the straight line connecting the at least one pair of diffusion light sources.

9. The location identification sensor as set forth in any one of claims 1 to 8, comprising:
a detection surface for being touched or approached by the object, the detection surface of a quadrangular shape,
wherein the at least one pair of diffusion light sources are provided along one of sides of the detection surface, and
the light receiving means, which is linearly configured, are provided along the other three sides of the detection surface.

10. An electronic device comprising a location identification sensor as set forth in any one of claims 1 to 9.

11. A display device comprising a location identification sensor as set forth in any one of claims 1 to 9.

12. The display device as set forth in claim 11, wherein the detection surface also serves as a display surface for displaying an image.

13. The display device as set forth in claim 11 or 12, wherein:
the display device is a liquid crystal display device having a liquid crystal panel formed by sealing liquid crystal between a counter substrate and an active matrix substrate, and
the diffusion light sources emit infrared light or ultraviolet light.

14. The display device as set forth in claim 13, wherein the light receiving means is provided on a surface of the active matrix substrate on which surface TFTs are provided.

15. The display device as set forth in claim 13 or 14, wherein
the diffusion light sources are provided on a display surface of the liquid crystal panel, the display surface being a surface for displaying an image.

16. The display device as set forth in any one of claims 13 to 15, comprising:
a light shielding film over the diffusion light sources.

17. A method for correcting location identification of an object, the location identification obtained by using a location identification sensor for detecting a location of an object based on triangulation principle,
the location identification sensor including:
at least one pair of diffusion light sources;
light receiving means for receiving light emitted from the diffusion light sources;
location identification means for identifying the location of the object on the basis of received light information of the light, the object being located between the light receiving means and the at least one pair of the diffusion light source, the received light information being supplied from the light receiving means,
the method comprising:
causing the location identification means to correct the location identification of the object at a predetermined T2 by using first positional information and second positional information of the object, where the first positional information corresponds to the output of the light receiving means for T2 which is timing when one of the at least one pair of the diffusion light sources is turned on, the second positional information corresponds to the output of the light receiving means for T1 and T3, which are timing when the other one of the at least one pair of the diffusion light sources is turned on, where T1 and T3 are before and after T2, respectively.

18. The method as set forth in claim 17, comprising:
causing the location identification means to correct the location identification of the object at the T3 by using first positional information and second positional information of the object, where the first positional information corresponds to the output of the light receiving means for T2 and T4 which are timing when the one of the at least one pair of the diffusion light sources is turned on, and the second positional information corresponds to the output of the light receiving means for T3 which is timing when the other one of the at least one pair of the diffusion light sources is turned on, where T2 and T4 are before and after T3, respectively.
